Europäisches Patentamt

European Patent Office

Office européen des brevets

(11) Publication number: **0 222 465**
**B1**

(12) **EUROPEAN PATENT SPECIFICATION**

(45) Date of publication of patent specification: **27.12.90**

(21) Application number: **86300513.8**

(22) Date of filing: **27.01.86**

(51) Int. Cl.⁵: **G 01 N 21/00,** G 01 N 33/18, G 01 N 15/00

(54) Impurity detector system.

(30) Priority: **25.09.85 JP 211882/85**

(43) Date of publication of application:
**20.05.87 Bulletin 87/21**

(45) Publication of the grant of the patent:
**27.12.90 Bulletin 90/52**

(84) Designated Contracting States:
**DE FR GB**

(56) References cited:
**DE-A-2 348 208**
**DE-A-3 406 176**
**DE-A-3 407 442**

**ANALYTICAL CHEMISTRY, vol.45, no.2, February 1973 WILBUR KAYE "Low angle Laser Light Scattering", p.221A-222A**

(73) Proprietor: **HITACHI, LTD.**
**6, Kanda Surugadai 4-chome**
**Chiyoda-ku, Tokyo 100 (JP)**

(72) Inventor: **Koseki, Yasuo**
**3712, Kanai-cho**
**Hitachiohta-shi Ibaraki-ken (JP)**
Inventor: **Yamada, Akira**
**4-29-8, Nishinarusawa-cho**
**Hitachi-shi Ibaraki-ken (JP)**
Inventor: **Ebara, Katsuya**
**1339-2, Motoyoshida-cho**
**Mito-shi Ibaraki-ken (JP)**
Inventor: **Takahashi, Sankichi**
**2-26-17, Moriyama-cho**
**Hitachi-shi Ibaraki-ken (JP)**
Inventor: **Kuroiwa, Minoru**
**36-8, Izumi**
**Abiko-shi Chiba-ken (JP)**

(74) Representative: **Calderbank, Thomas Roger et al**
**MEWBURN ELLIS & CO. 2/3 Cursitor Street**
**London EC4A 1BQ (GB)**

Courier Press, Leamington Spa, England.

**Description**

The present invention relates to a detector system for detecting impurities in liquids, and also to a method of measuring the number and size of impurities in a liquid.

The present invention is particularly but not exclusively, concerned with the detection of impurities in high-purity water (also known as super-pure water). High-purity water is used in such fields as nuclear power generation, in the electronics industry, and in medical treatment, where it is important that the water used should have minimal amounts of organic or inorganic substances contained within it. The organic substances include, for example, soluble organic matter and insoluble microorganisms, whilst the inorganic substances may include soluble salts and insoluble fine particles.

The importance of using high-purity water can be seen, for example, in the context of washing of semiconductor integrated circuits. When a semiconductor integrated circuit is in water containing impurities, those impurities may be left on the surface of the device, causing malfunctioning of the device. Thus, increasing amounts of impurity in the water cause increasing failure rate in the devices produced, and therefore it is desirable to use water of as high a purity as possible. The difficulty, however, is that existing techniques for determining the purity level in water, when the concentration of impurities is low, are not accurate and therefore it is difficult to predict the effect any particular water sample may have.

Methods for producing high-purity water have already been developed. For example the article in the Journal "Kagaku Sochi" (Chemical Apparatus), pages 81 to 84 of January, 1984 discloses methods of refining water to produce high-purity water. In such methods, primary pure water is produced by filtration and by reverse osmosis, and that primary pure water is further refined by a polisher and an ultra-filter, and the result is high-purity water. However, since the purification methods are not 100% efficient in removing impurities, it is still necessary to determine the amount of impurities in the high-purity water produced.

In the conventional system for determining the amount of impurity present in the water the following analysis of the water at an intermediate point of a line for supplying refined water to a use point is performed. A sensor is installed in a refined water supplying pipe to detect soluble organic matter, and measurement is made by a total organic carbon (TOC) measuring instrument. Meanwhile, the soluble organic matter is similarly detected by a sensor installed in the pipe, and specific resistance is measured by an electric conductance measuring instrument. These two measurements, can be carried out on-line.

With respect to fine particles in water, a part of refined water is filtered by a filter to catch fine particles. Then, fine particles on the filter are magnified and observed by using an electron microscope so as to measure the diameter and number of the particles. Micro-organisms are cultured after being caught as in the case of the measurement of fine particles, and the number of the micro-organisms is measured from the colonies of the microorganisms using an electron microscope.

The measurement of fine particles and microorganisms cannot be effected on-line, and a long time and expertise are required in the measurement. For this reason, it is impossible rapidly to measure the quality of the refined water and to immediately transmit the results to the refining stage, and control the refining conditions so as to improve the water quality.

A method in which the impurities in a liquid are measured on-line by direct use of a laser is known from, e.g. Analytical Chemistry, 45(2), 223A, 1973. However, the entire amount of impurities in the liquid cannot be measured by this method. As mentioned above, the impurities contained in a liquid (in water) may include granular substances which are insoluble in water and substances dissolved in water. The granular substances may be further divided into inorganic and organic substances and the latter into microorganisms and others. The dissolved substances may also be divided into inorganic and organic substances and these two types may be further divided into electrolytes and non-electrolytes. Although the above described substances are all classified as impurities in water, it is necessary to measure all of the impurities because the above described substances are contained in high-purity water in extremely small quantities. However, substances dissolved in water cannot be measured by the laser method mentioned above.

Japanese Utility Model Publication No. 51-43086 discloses a method and apparatus for calibration of a laser particle detector by providing a gas flow containing entrained solid particles of predetermined size. A liquid containing the particles of predetermined size is injected with gas into an atomisation chamber through an atomising nozzle. Part of the atomised liquid and the gas is passed from a second nozzle into a stream of warmed gas upstream of the particle detector. The liquid evaporates in the warm gas stream to leave the particles entrained in the gas stream. The detector measures the particle size, and the measured values compared with the actual size of the particles. Atomised liquid not entering the warm gas stream returns from the atomisation chamber via a drain outlet into a holding tank for the liquid to be atomised.

However, this method is not entirely accurate. Since only part of the liquid reaches the detector, it is critically important that that part must be a representative sample, which is not always the case. Furthermore, the two-part atomisation and evaporation also creates the possibility of error.

The present invention seeks to provide an impurity detector, and a method of measuring impurities, which is accurate, and permits on-line operation. The idea underlying the present invention is that a liquid sample should be atomised by injecting it with gas into a chamber, in which chamber the liquid is totally evaporated.

# EP 0 222 465 B1

Thus, in a first aspect of the present invention there is provided an impurity detector system for liquid, having:

(a) an evaporation chamber for a liquid sample;

(b) an atomising nozzle for injection of liquid sample into the chamber with a gas;

(c) means for heating the liquid to effect evaporation in said chamber of all the atomised liquid;

(d) a detector region to which the chamber is connected in a substantially closed manner so that all the gas and all the solid impurity particles entrained in the gas due to the evaporation of the liquid pass from the chamber to the detector region;

(e) a particle detector communicating with the detector region adapted to measure the number and size of the impurity particles in the gas,

wherein a liquid supply duct to the nozzle has a first path adapted to pass the liquid sample directly to the nozzle and a second path containing a filter unit adapted to filter the liquid sample prior to the injection of the sample into the chamber.

According to a second aspect of the present invention there is provided a method of measuring the number and size of impurities in a liquid sample comprising the steps of:

(a) passing the liquid sample directly to a nozzle;

(b) atomising the liquid sample by injecting it with gas into a chamber from the nozzle;

(c) passing the atomised liquid and gas along the chamber, all the liquid being evaporated in the chamber to leave solid impurity particles entrained in the gas;

(d) passing all the gas having the solid impurity particles entrained therein to a detector region;

(e) at the detector region, measuring the number and size of the solid impurity particles in the gas by means of a particle detector;

(f) repeating steps (b) to (e) for a liquid sample passed via a filter to the nozzle.

Preferably the particle detector is one using dispersed laser beams. Such detectors are known per se. An example is disclosed in a magazine "Air Conditioning and Refrigeration" of January, 1984, pages 79 to 81, in an article entitled "Monitoring and Measurement of Sub-micron Aerosol Particles". A dispersed laser beam detector is capable of detecting particles with diameters greater than 0.1 µm.

The evaporation of the liquid in the chamber is preferably achieved by pre-heating the gas before it is used to atomise the liquid, and temperatures of greater than 40°C, more preferably greater than 60 to 70°C has been found suitable. However, it is also possible to evaporate the liquid by heating the entire chamber, by applying infra-red radiation to the atomised liquid, or applying high frequency energy to the atomised liquid to create molecular movement in the liquid.

It has been found that atomisation of the liquid generally produces water droplets containing only one impurity particle, so that subsequent evaporation causes the production of a flow of discreet particles, each corresponding to one impurity, whether that impurity is based on a soluble, or an insoluble, substance present in the liquid. It then becomes possible to determine the number and size of the individual particles, thereby permitting accurate analysis of the sample.

Embodiments of the invention will now be described in detail, by way of example, with reference to the accompanying drawings in which:

Fig. 1 shows an impurity detector system being a first embodiment of the present invention;

Fig. 2 shows an impurity detector system being a second embodiment of the present invention;

Fig. 3 shows the impurity detector of Fig. 1 or 2 in more detail;

Fig. 4 is a graph showing the variation of evaporation rate with flow rate ratio of gas and water;

Fig. 5 is a graph showing the variation of total evaporation with gas temperature and weight/flow rate ratio;

Fig. 6 is a graph showing the variation of total evaporation with relative humidity of gas and flow rate ratio.

Fig. 7 shows a modification of the detector of Fig. 3.

Fig. 8 shows a two-outlet nozzle for use in the present invention;

Fig. 9 shows a water purification system using the impurity detector system of Fig. 1;

Fig. 10 shows a modification of the system of Fig. 6; and

Fig. 11 is a graph illustrating the variation of impurity volume with impurity concentration for three different water samples.

The impurity detector 10 has a chamber 11, the inlet to which is formed by a nozzle 12. The nozzle 12 is connected to a source of pure water via an inlet conduit 13, and also to a source of air via a conduit 14. The conduit 14 contains a filter 15, which removes particles having a size greater than 0.1 µm from the air stream, and also contains a heater 16 which raises the temperature of the air, before it is injected into the nozzle 12. At the end of the chamber 11 remote from the nozzle 12, is a detector region 17 containing a duct 18 to a particle detector 19. The particle detector 19 preferably uses dispersed laser beams.

Ultra-pure water in a duct 60 (e.g. to some suitable outlet) is sampled via an inlet 61 and fed to the duct 13 extending to the nozzle 12 of the chamber 11 of the impurity detector. A pump 62 is provided in the duct 13 in order to cause the water to move to the nozzle 12. The conduit 13 also contains a valve 63 which can either allow the water to pass in the duct 13 directly to the nozzle 12, or may divert it via a filter sub-system 64, before it is returned to the duct 13. The filter sub-system 64 removes fine particles in the water by means of a membrane filter having a suitable pore diameter, and thus the quantities of the granular impurities in

3

the water can be obtained by determining the difference in results when the water has passed through the filter sub-system 64, and when it has not.

In use, the valve 63 is first set so as to pass the pure water via the conduit 13 directly to the nozzle, simultaneously with heated air via the conduit 14. The pressure of the air is preferably 40 to 60 kg/cm² ($\times$ 0,98.10⁵Pa). The mixing of the pressurised air with the water causes a jet of atomised liquid 20 to be expelled from the nozzle 12 into the chamber 11. It is found that the heating of the air to a temperature greater than 40°C (more preferably greater than 60 to 70°C) causes the water droplets to evaporate in the chamber before a significant quantity contacts the side walls of the chamber. The evaporation of the liquid in the jet 20 produces a flow of particles corresponding to the impurities present in the liquid before atomisation, and the pressurised air causes these particles to be carried to the detection region 17. Here, some of the particles enter the duct 18 to the detector 19, which calculates the number and diameter of the particles. From this information the volume V1 of particles in the water sample entering the chamber 11 through the nozzle 12, can be calculated by a calculating unit 65. Since the detector 19 can operate continuously, on-line measurement of the impurities in the water sample can be determined.

Then the valve 63 directs the water via the filter sub-system 64, and the detector 19 measures the impurities then present in the water. The calculator 65 then calculates the total volume V2 of the particles. Thus, the volume of soluble impurities corresponds to the second measurement V2, whilst the total amount of granular impurities is the difference between the first measurement V1 and the second measurement V2.

A membrane filter having a pore diameter of 0.1µm is suitable for use in the filter sub-system 64.

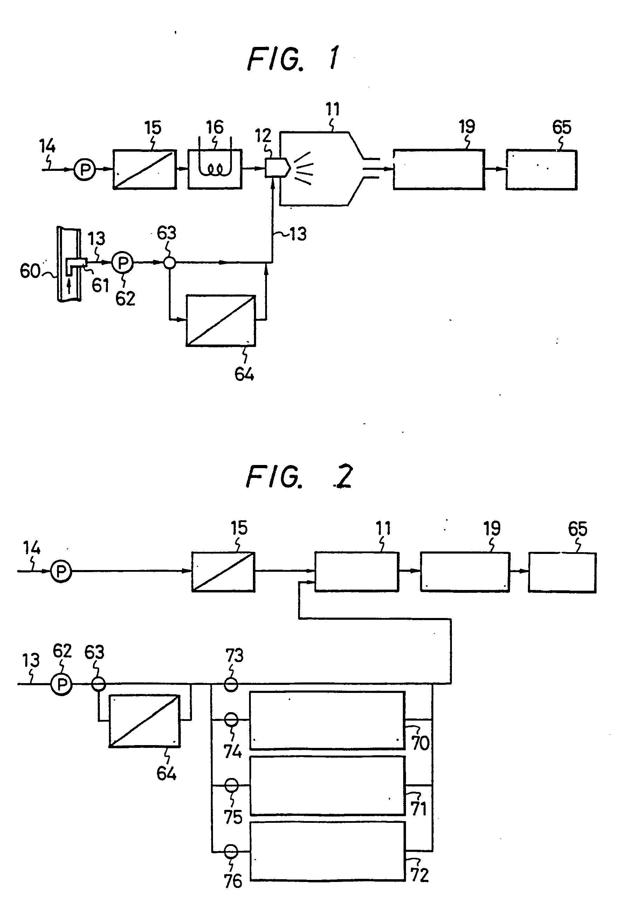

The apparatus of Fig. 1 may be further modified as shown in Fig. 2, which shows a second embodiment of the present invention. In Fig. 2, three further filtration systems are provided, being a system 70 for removing organic substances, a system 71 for removing electrolytes, and a system 72 for removing microorganisms. These three systems 70, 71 and 72 are provided in parallel with the conduit 13 to the chamber 11, and the flow of water through them is controlled by valves 73, 74, 75 and 76. The system is otherwise similar to that shown in Fig. 1. By measuring the differences between the volumes obtained by the calculator unit 65 when the water is fed directly to the chamber 11, when it passes filtration sub-system 64, or when it is passed through any of systems 70, 71 and 72, the amounts of organic substances, electrolytes, and microorganisms can be measured.

The system 70 for removing organic substances may be based on activated carbon, but it is preferable that it is based on oxidation with ozone or ultra-violet light as this causes less contamination. Electrolytes can be removed by the system 71 by using an iron removing method involving an iron exchange resin, or an iron exchange membrane, but there is a risk of contamination due to impurities in the resin. It is even more difficult to provide a suitable micro-organism removal system 72, the most promising systems being filtration or sterilisation.

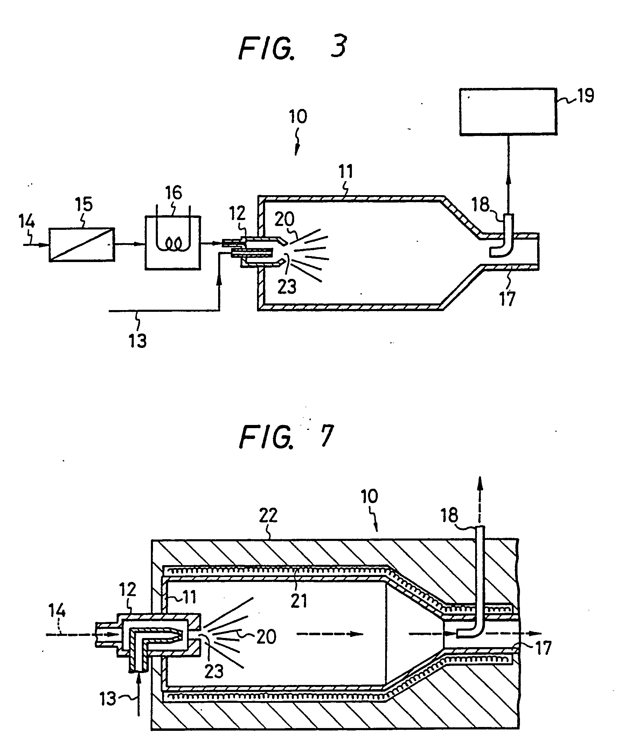

Fig. 3 shows the structure of the impurity detector 10 in more detail, and in particular the emission of a jet 20 of atomised liquid from the nozzle 12.

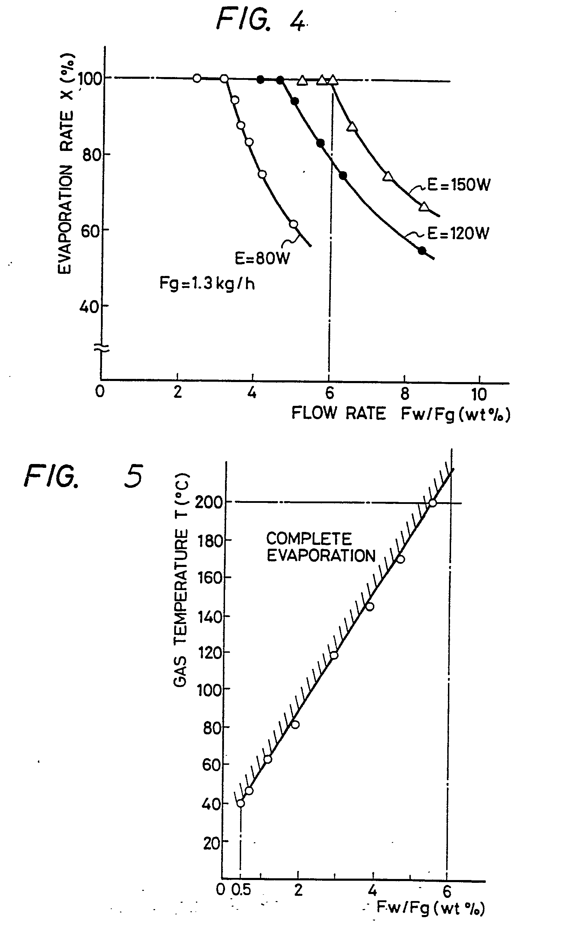

It is important that all the liquid injected into the chamber 11 is evaporated. Therefore, the conditions necessary for complete evaporation have been investigated, and the results of experiments are shown in Figs. 4, 5, and 6. Fig. 4 shows the relationship between the evaporation rate (%) and the weight/flow rate ratio (fw/fg) of the liquid (water) and the gas (air). The evaporation rate is defined as follows:

$$\text{Evaporation rate } X = \frac{\text{Amount of Evaporation}}{\text{Amount of Atomisation}} \times 100$$

Although an increase in the heating of the gas by the heater 16 increases the vaporisation rate, the vaporisation gas temperature at the outlet of the nozzle 12 becomes high, so that a heater input of about 150 W is normally a practical limit. Fig. 4 shows the variation in evaporation rate X with weight/flow rate ratio, for different heater inputs, and it can be seen from the figure that the weight/flow rate should preferably be less than 6 wt%. The practical lower limit is about 0.5 wt%, taking into account the amount of carrier gas used, the increase in heater energy required, and the increase in measurement time due to reduction in the number of particles in a given volume.

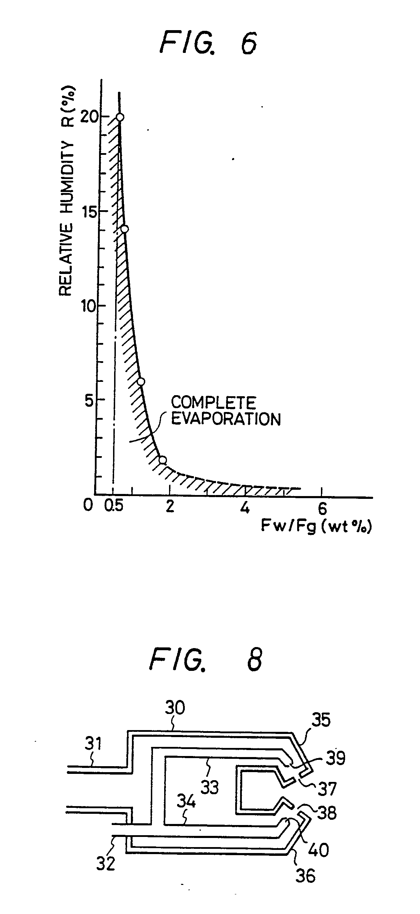

Next, investigation was made between the relationship between the weight/flow rate ratio fw/fg and the temperature of the gas, taking into account that all the liquid must be evaporated. Fig. 5 shows the results, and it can be seen that a temperature of at least 40°C is necessary for weight/flow rate ratios within the range determined above.

Investigation was also made of the variation in weight/flow rate ratio fw/fg with the relative humidity R of the gas. The results are shown in Fig. 6 and it can be seen that the relative humidity R must be less than 20% for satisfactory operation over the range of weight/flow rate ratios determined above.

It is also important that the liquid evaporated does not re-condense within the chamber 11. With suitable gas temperatures and flow rates it is possible to prevent this, but to reduce the risk of condensation, the impurity detector 10 of Fig. 3 may be modified as shown in Fig. 7. As illustrated in that figure, the chamber 11 is surrounded by a heater coil 21, and that coil is surrounded by an insulation layer 22. The heater coil 21 ensures that the temperature in the chamber 11 is maintained sufficiently high to prevent recondensation of the liquid. Indeed, if the temperature of the chamber 11 is sufficiently high, it becomes unnecessary to heat the gas fed to the nozzle 12 via conduit 14. Although there may then be a slight delay between atomisation and evaporation, the temperature in the chamber 11 produced by the heater 21, may still be sufficiently high to ensure that all the liquid is evaporated before any reaches the duct 18 to the particle detector.

Other methods of causing evaporation of the gas may also be used, for example using infra-red heating, or by the application of high frequency energy to the water droplets.

As illustrated in Figs. 3 and 7, the nozzle 12 has a single outlet orifice 23. However, Fig. 8 shows a nozzle arrangement developed in conjunction with the present invention which gives an improved performance. That nozzle 30 has an inlet 31 for connection to the conduit 14 for the gas, and a second inlet 32, for connection to the conduit 13 for the water. As can be seen from Fig. 8, however, the ducting from the inlet 32 divides into two branches 33, 34, each of which extends within a separate arm 35, 36 of the nozzle 30. The interior of the arms 35, 36 communicate with the inlet 31. Each of the arms 35, 36 terminates in an orifice 37, 38 through which the liquid is expelled under the influence of the gas pressure from outlets 39, 40 of the branches 33, 34. As can be seen, the ends of the arms 35, 36 are inclined relative to each other, so that the jets of liquid emitted from the orifices 37, 38 will intersect each other. It has been found that this causes further atomisation of the liquid, increasing the efficiency of the nozzle 30 as a whole.

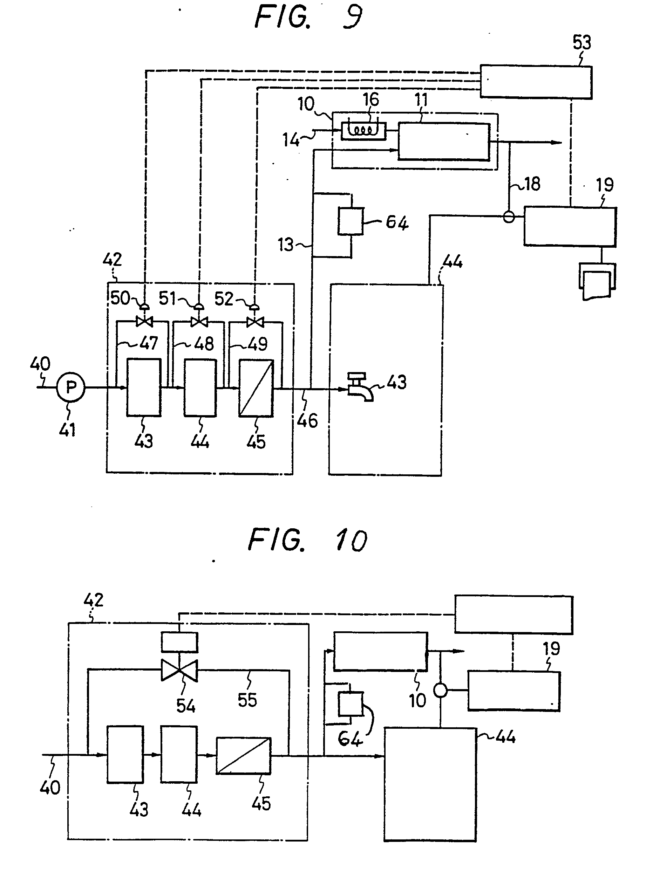

Fig. 9 shows an impurity detector 10 according to the present invention within a water purification system. As shown in Fig. 9, water from an inlet 40 is pumped by a pump 41 through a purification system 42 to an outlet 43 within an area 44 in which the water is to be used. As is shown in Fig. 9, water entering the purifier 42, passes first to a ultra-violet ray steriliser 43 which kills any bacteria present in the water. The water then passes to a polisher 44 which removes soluble inorganic matter, and finally to an ultra-filter 45 which removes microorganisms and fine particles, and macromolecular soluble organic substances. The ultra-pure water produced is then passed via a duct 46 to the outlet 43. The conduit 13 which conveys the ultra-pure water to the impurity detector 10, is formed as a branch of the conduit 46. Feedback loops 47, 48 and 49 are connected from the outlet to the inlet of the steriliser 43, the polisher 44, and the ultra-filter 45 respectively. Each of these feedback loops 47, 48 and 49, contains a valve 50, 51 and 52 respectively, the opening and closing of which is controlled via a control unit 53. The control unit 53 is also connected to the particle detector 19, and when that particle detector indicates that the impurity concentration has risen, the control unit 53 causes opening of the valves 50, 51 and 52 to cause water to be fed back around the feedback loops 47, 48 and 49, thereby forming a circulatory loop to increase the sterilisation, polishing, and ultra-filtration, before the water reaches the duct 46. The use of three different valves 50, 51, and 52 permits the controller 53 to modify the purification operations performed by the purifier 42 in varying ways depending on the impurity detected by the detector 19. Again, the presence of the filter sub-system 64 allows two separate measurements to be performed to analyse soluble and granular impurities.

In a simplification of this system, shown in Fig. 10, a single valve 54 is connected in a feedback loop 55 extending from the outlet of the ultra-filter 45 to the inlet of the steriliser 43. The rest of the system is generally similar to the arrangement shown in Fig. 9.

Three experiments will now be described in which the impurities present in several types of water was measured using the system shown in Fig. 1.

Experiment 1

Underground water having a total concentration of evaporated residues of 30 ppm was diluted in pure water (the total evaporated residue was estimated to be several ppb), and water of various concentrations was atomised and vaporised using clean air at a temperature of 80°C. The particle diameter and the number of solid particles produced having a diameter greater than 0.1μm were then determined using the laser scattering detector. The result showed that good correlations between the concentration C and the total volume V of impurities occurred at concentrations of around 10 ppb, and that the total evaporated residue could be determined by the total volume V.

Experiment 2

Sodium chloride, representing electronics contained in water, was diluted in a similar way as in experiment 1. After measurement of the water in various concentrations, under the same conditions as experiment 1, it was found that good correlations were found between the total volume V and the concentration C.

Experiment 3

Glucose, representing organic substances contained in water, was diluted and measured in a similar way to experiment 1 and 2. Again, it was found that a good correlation was obtained between the total volume V and the concentration C.

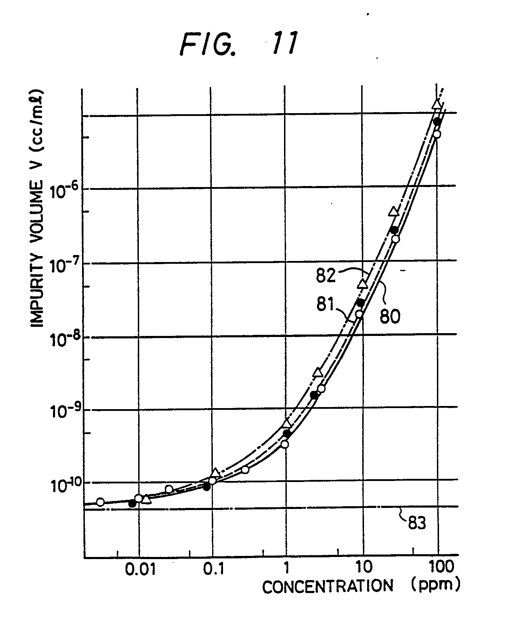

The results of these three experiments are shown graphically in Fig. 11. The results from experiment 1 are indicated by the open circles, joined by a solid line 80, the results from experiment 3 indicated by the solid circles joined by a dash line, and the results from experiment 2 indicated by triangles joined by a dot and dash line 82. The results for "pure" water (water containing no detectable impurities) is indicated by line 83.

Thus, according to the present invention as described above, it is possible to carry out on-line measurements of the concentrations of impurities in a liquid such as water. The impurities that can be measured include not only particles suspended in the water, but also dissolved salts and microorganisms making possible a comprehensive water quality assessment which, up till now, has not been possible. Furthermore, monitoring of water quality, and controlling that quality by means of feedback to the filtration arrangement from the particle detector, makes it possible to produce high-purity water on a continuous, and 5 stable, basis.

The present invention also makes it possible to measure impurities in high-purity water using a single instrument, rather than several measuring instruments as has previously been required.

**Claims**

1. An impurity detector system for liquid, having:
(a) an evaporation chamber (11) for a liquid sample;
(b) an atomising nozzle (12, 30) for injection of liquid sample into the chamber (11) with a gas;
(c) means for heating the liquid to effect evaporation in said chamber (11) of all the atomised liquid;
(d) a detector region (17) to which the chamber (11) is connected in a substantially closed manner so that all the gas and all the solid impurity particles entrained in the gas due to the evaporation of the liquid pass from the chamber to the detector region (17);
(e) a particle detector (19) communicating with the detector region (17) adapted to measure the number and size of the impurity particles in the gas, wherein a liquid supply duct (13) to the nozzle (12) has a first path adapted to pass the liquid sample directly to the nozzle (12) and a second path containing a filter unit (64) adapted to filter the liquid sample prior to the injection of the sample into the chamber.

2. An impurity detector system according to claim 1, wherein said means for heating the liquid comprises a heater unit (16) for heating the gas, the liquid being heated by the gas in the chamber (11).

3. An impurity detector system according to claim 1 or claim 2, including a heater (21) surrounding the chamber (11).

4. An impurity detector system according to any one of claims 1 to 3, wherein the particle detector (14) is a dispersed laser beam detector.

5. An impurity detector system according to any one of the preceding claims, wherein the nozzle (30) has at least two outlet orifices (37, 38) inclined to each other such to form intersecting injection paths for the liquid.

6. A high-purity water system, comprising:
a filtration unit (42) having an inlet duct (40) for receiving water, an outlet duct (46), and at least one filter system (43, 44, 45) for purifying said water, the filter system (43, 44, 45) having an inlet communicating with the inlet duct (40) and an outlet communicating with the outlet duct (46), a feedback duct (47, 48, 49) connected between the outlet and the inlet of the filter system (43, 44, 45) for returning at least some of the water from the outlet to the inlet of the filter system (43, 44, 45), and a valve (50, 51, 52) in the feedback duct (47, 48, 49) for controlling flow of water through the feedback duct (47, 48, 49);
a dispenser (43) for water connected to said outlet duct (46);
an impurity detector (10) according to claim 1, the liquid sample of the impurity detector (10) being water from the filtration unit, and
a controller unit (53) connected the particle detector (19) and the valve (50, 51, 52);
thereby to permit the controller unit (53) to regulate the flow of water through the feedback duct (47, 48, 49) by control of said valve (50, 51, 52) in dependence on the number and size of particles detected by the particle detector (19).

7. Method of measuring the number and size of impurities in a liquid sample comprising the steps of:
(a) passing the liquid sample directly to nozzle;
(b) atomising the liquid sample by injecting it with gas into a chamber from the nozzle;
(c) passing the atomised liquid and gas along the chamber, all the liquid being evaporated in the chamber to leave solid impurity particles entrained in the gas;
(d) passing all the gas having the solid impurity particles entrained therein to a detector region;
(e) at the detector region, measuring the number and size of the solid impurity particles in the gas by means of a particle detector;
(f) repeating steps (b) to (e) for a liquid sample passed via a filter to the nozzle.

8. A method according to claim 7, wherein the gas is heated prior to the atomisation step, the liquid being evaporated due to heat transfer from said gas.

9. A method according to claim 8, wherein the gas is heated to a temperature not less than 40°C.

10. A method according to claim 7, wherein the weigh/flow rate ratio of the liquid and the gas is between 0.5 wt% and 6 wt%.

**Patentansprüche**

1. System zur Erfassung von Verunreinigungen einer Flüssigkeit mit.
(a) einer Verdampfungskammer (11) für eine Flüssigkeitsprobe;

(b) einer Zerstäubungsdüse (12, 30) für die Einspritzung der Flüssigkeitsprobe in die Kammer (11) mit einem Gas;

(c) Einrichtungen zur Erhitzung der Flüssigkeit zum Zweck der Verdampfung der gesamten zerstäubten Flüssigkeit in der Kammer (11);

(d) einem Erfassungsbereich (17), an dem die Kammer (11) im wesentlichen anschließend angebracht ist, so daß das gesamte Gas sowie alle aufgrund der Verdampfung der Flüssigkeit im Gas mitgerissenen festen Verunreinigungspartikel von der Kammer in den Erfassungsbereich (17) gelangen;

(e) einem Partikeldetektor (19), der mit dem Erfassungsbereich (17) kommuniziert und ausgebildet ist zur Messung der Anzahl und Größe der Verunreinigungspartikel im Gas, wobei eine Flüssigkeitszuleitung (13) zur Düse (12) einen ersten Pfad aufweist, der ausgebildet ist zur Leitung der Flüssigkeitsprobe direkt zur Düse (12), und einen zweiten Pfad, der eine Filtereinheit (64) enthält und ausgebildet ist zur Filterung der Flüssigkeitsprobe vor dem Einspritzen der Probe in die Kammer.

2. System nach Anspruch 1, bei dem Einrichtungen zur Erhitzung der Flüssigkeit eine Heizeinheit (16) zur Erhitzung des Gases umfassen, wobei die Flüssigkeit durch das Gas in der Kammer (11) erhitzt wird.

3. System gemäß Anspruch 1 oder 2, umfassend einen Erhitzer (21), der die Kammer (11) umgibt.

4. System nach einem der Ansprüche 1 bis 3, worin der partikeldetektor (14) ein Laserstrahl-Zerstreuungsdetektor ist.

5. System nach einem der vorhergehenden Ansprüche, worin die Düse (30) zumindest zwei gegeneinander angestellte Mündungen (37, 38) aufweist, zur Bildung von sich überschneidenden Einspritzpfaden der Flüssigkeit.

6. Hochreines Wassersystem mit:

einer Filtereinheit (42) mit einer Zuflußleitung (40) für die Entgegennahme von Wasser, einer Abflußleitung (46) und zumindest einem Filtersystem (43, 44, 45) zur Reinigung des Wassers, wobei das Filtersystem (43, 44, 45) einen mit der Zuflußleitung (40) kommunizierenden Einlaß und einen mit der Abflußleitung (46) kommunizierenden Auslaß aufweist, einer Rückführleitung (47, 48, 49), die zwischen dem Auslaß und dem Einlaß des Filtersystems (43, 44, 45), verbunden ist zur Rückführung zumindest eines Teils des Wassers vom Auslaß zum Einlaß des Filtersystems (43, 44, 45) und einem Ventil (50, 51, 52) in der Rückführleitung (47, 48, 49) zur Regelung des Wasserflusses durch die Rückführleitung (47, 48, 49);

einer Zapfeinrichtung (43) für Wasser, die mit der Abflußleitung (46) verbunden ist;

einem Verunreinigungsdetektor (10) gemäß Anspruch 1, wobei die Flüssigkeitsprobe des Verunreinigungsdetektors (10) Wasser aus der Filterungseinheit ist, und

einer Regeleinheit (53), die mit dem Partikeldetektor (19) und dem Ventil (50, 51, 52) verbunden ist;

um zu ermöglichen, daß die Regeleinheit (53) den Wasserfluß durch die Rückführleitung (47, 48, 49) durch Steuerung des Ventils (50, 51, 52) in Abhängigkeit von der Anzahl und Größe der durch den Partikeldetektor (19) erfaßten Partikel reguliert wird.

7. Verfahren zur Messung der Anzahl und Größe von Verunreinigungen in einer Flüssigkeitsprobe mit den Schritten:

(a) Leitung der Flüssigkeitsprobe direkt zu einer Düse;

(b) Zerstäubung der Flüssigkeitsprobe durch Einspritzung zusammen mit Gas mittels der Düse in eine Kammer;

(c) Leitung der zerstäubten Flüssigkeit und des Gases entlang der 2ammer, wobei die gesamte Flüssigkeit in der Kammer verdampft wird und die mit dem Gas mitgerissenen festen Verunreinigungspartikel zurückbleiben;

(d) Leitung des gesamten Gases mit den mitgerissenen festen Verunreinigungspartikeln in einen Erfassungsbereich;

(e) Messung der Anzahl und Größe der festen Verunreinigungspartikel des Gases mittels eines Partikeldetektors im Erfassungsbereich;

(f) Wiederholung der Schritte (b) bis (e) für eine Flüssigkeitsprobe, die über einen Filter zur Düse geleitet wird.

8. Verfahren nach Anspruch 7, bei dem das Gas vor dem Zerstäubungsschritt erhitzt und die Flüssigkeit aufgrund der Wärmeleitung vom Gas verdampft wird.

9. Verfahren nach Anspruch 8, bei dem das Gas auf eine Temperatur von nicht weniger als 40°C erhitzt wird.

10. Verfahren nach Anspruch 7, bei dem das Gewichts/Durchflußverhältnis der Flüssigkeit und des Gases zwischen 0,5 Gew.-% und 6 Gew.-% beträgt.

## Revendications

1. Système détecteur d'impuretés pour un liquide, possédant:

(a) une chambre d'évaporation (11) pour un échantillon de liquide;

(b) une buse de pulvérisation (12, 30) pour une injection d'échantillon de liquide dans la chambre (11) avec un gaz;

(c) des moyens pour chauffer le liquide pour provoquer une évaporation dans ladite chambre (11) de la totalité du liquide pulvérisé;

(d) une région de détecteur (17) à laquelle la chambre (11) est reliée d'une manière sensiblement close de sorte que la totalité du gaz et la totalité des particules d'impuretés solides entraînées dans le gaz par suite de l'évaporation du liquide passent de la chambre à la région de détecteur (17);

(e) un détecteur de particules (19) en communication avec la région de détecteur (17) apte à mesurer le nombre et la dimension des particules d'impuretés dans le gaz, dans lequel un conduit d'alimentation en liquide (13) jusqu'à la buse (12) possède un premier parcours apte à faire passer l'échantillon de liquide directement à la buse (12) et un second parcours contenant un filtre (64) apte à filtrer l'échantillon de liquide avant l'injection de l'échantillon dans la chambre.

2. Système détecteur d'impuretés selon la revendication 1, dans lequel lesdits moyens pour chauffer le liquide comportent un organe de chauffage (16) pour chauffer le gaz, le liquide étant chauffé par le gaz dans la chambre (11).

3. Système détecteur d'impuretés selon la revendication 1 ou la revendication 2, comprenant un organe de chauffage (21) entourant la chambre (11).

4. Système détecteur d'impuretés selon l'une quelconque des revendications 1 à 3, dans lequel le détecteur de particules (14) est un détecteur à faisceau laser dispersé.

5. Système détecteur d'impuretés selon l'une quelconque des revendications précédentes, dans lequel la buse (30) possède au moins deux orifices de sortie (37, 38) inclinés l'un par rapport à l'autre de manière à former des trajets d'injection s'entrecoupant pour le liquide.

6. Système d'eau à pureté élevée comportant:

une unité de filtration (42) possédant un conduit d'admission (40) pour recevoir de l'eau, un conduit de sortie (46), et au moins un système de filtre (43, 44, 45) pour purifier ladite eau, le système de filtre (43, 44, 45) possédant un orifice d'admission en communication avec le conduit d'admission (40) et un orifice de sortie en communication avec le conduit de sortie (46), un conduit d'alimentation en retour (47, 48, 49) monté entre l'orifice de sortie et l'orifice d'admission du système de filtre (43, 44, 45) pour renvoyer au moins une partie de l'eau depuis l'orifice de sortie à l'orifice d'admission du système de filtre (43, 44, 45) et une soupape (50, 51, 52) dans le conduit d'alimentation en retour (47, 48, 49) pour commander un écoulement de l'eau à travers le conduit d'alimentation en retour (47, 48, 49);

un distributeur (43) pour de l'eau relié audit conduit de sortie (46);

un détecteur d'impuretés (10) selon la revendication 1, l'échantillon de liquide du détecteur d'impuretés (10) étant de l'eau provenant de l'unité de filtration, et

une unité de commande (53) reliéeau détecteur de particules (19) et à la soupape (50, 51, 52);

permettant ainsi à l'unité de commande (53) de réguler l'écoulement de l'eau à travers le conduit d'alimentation en retour (47, 48, 49) par commande de ladite soupape (50, 51, 52) en fonction du nombre et de la dimension des particules détectées par le détecteur de particules (19).

7. Procédé de mesure du nombre et de la dimension d'impuretés dans un échantillon de liquide comportant les étapes consistant à:

(a) faire passer l'échantillon de liquide directement à une buse;

(b) pulvériser l'échantillon de liquide en l'injectant avec un gaz dans une chambre à partir de la buse;

(c) faire passer le liquide et le gaz pulvérisés le long de la chambre, la totalité du liquide étant évaporé dans la chambre pour laisser des particules d'impuretés solides entraînées dans le gaz;

(d) faire passer la totalité du gaz avec les particules d'impuretés solides entraînées dans celui-ci jusqu'à une région de détecteur;

(e) dans la région de détecteur, mesurer le nombre et la dimension des particules d'impuretés solides dans le gaz au moyen d'un détecteur de particules;

(f) répéter les étapes (b) à (e) pour un échantillon de liquide ayant traversé un filtre en direction de la buse.

8. Procédé selon la revendication 7, dans lequel le gaz est chauffé avant l'étape de pulvérisation, le liquide étant évaporé par suite du transfert de chaleur à partir dudit gaz.

9. Procédé selon la revendication 8, dans lequel le gaz est chauffé à une température non inférieure à 40°C.

10. Procédé selon la revendication 7, dans lequel le rapport poids/débit du liquide et du gaz est compris entre 0,5 et 6% en poids.

FIG. 1

FIG. 2

FIG. 3

FIG. 7

FIG. 4

FIG. 5

FIG. 6

FIG. 8

## FIG. 9

## FIG. 10

FIG. 11